# EUROPEAN PATENT APPLICATION

(11) **EP 4 794 434 A1**
(43) Date of publication of application: **19.08.2026**
(21) Application number: 24887805.0
(22) Date of filing: 28.10.2024
(51) Int. Cl.: H04W 72/541, H04W 72/04

(54) **COMMUNICATION METHOD AND APPARATUS**

(30) Priority: 07.11.2023 CN 202311475550
(71) Applicant: HUAWEI TECHNOLOGIES CO., LTD., Shenzhen 518129 (CN)
(72) Inventor: QU, Huiyang, Shenzhen, Guangdong 518129 (CN); HUANG, Huang, Shenzhen, Guangdong 518129 (CN)
(74) Representative: Pfenning, Meinig & Partner mbB
(86) International application number: PCT/CN2024/127904
(87) International publication number: WO 2025/098192

(57) **Abstract**

A communication method and apparatus are provided. The method includes: A transmitting end obtains a first DMRS sequence and a first sequence, where the first sequence is obtained by performing repetition, frequency domain phase offset, or time domain cyclic shift on the first DMRS sequence. The transmitting end transmits first information, where the first information includes the first DMRS sequence and the first sequence, the first information occupies M symbols, the first DMRS sequence occupies M1 symbols among the M symbols, the first sequence occupies M2 symbols among the M symbols, and M1, M2, and M are all positive integers. A transmit power of the first DMRS sequence is greater than a transmit power of the first sequence. In this way, this helps reduce interference between the first DMRS sequence and the first sequence.

## Description

### CROSS-REFERENCE TO RELATED APPLICATIONS

This application claims priority to Chinese Patent Application No. 202311475550.4, filed with the China National Intellectual Property Administration on November 7, 2023 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

Integrated sensing and communication (integrated sensing and communication, ISAC) is widely considered as one of key application scenarios of next-generation wireless communication 6G. Specifically, wireless signals transmitted from a transmitting end to a receiving end are required to meet both sensing requirements and communication requirements. The sensing requirement is that the receiving end senses a relative location between the transmitting end and obstacles in surrounding environment of the transmitting end, a moving speed of the transmitting end, moving speeds of the obstacles, and the like. The communication requirement is that the transmitting end sends communication data to the receiving end.

Typically, the transmitting end may simply superimpose a communication sequence and a sensing sequence that are located on a same time-frequency resource to obtain a transmit signal, thereby meeting sensing requirements and communication requirements. However, the communication sequence and the sensing sequence interfere with each other. How to reduce interference between a communication sequence and a sensing sequence under such superposition is an urgent technical problem to be resolved currently.

### SUMMARY

This application provides a communication method and apparatus, to reduce interference between a communication sequence and a sensing sequence in an ISAC scenario.

According to a first aspect, this application provides a communication method, and the method may be performed by a transmitting end. For example, when an access network device transmits a signal to a terminal, the transmitting end may be the access network device or a module in the access network device, for example, a chip. When the terminal transmits a signal to the access network device, the transmitting end may be the terminal or a module in the terminal, for example, a chip.

The method includes: The transmitting end obtains a first demodulation reference signal (demodulation reference signal, DMRS) sequence and a first sequence, where the first sequence is obtained by performing repetition (repetition), frequency domain phase offset, or time domain cyclic shift on the first DMRS sequence. The transmitting end transmits first information, where the first information includes the first DMRS sequence and the first sequence, the first information occupies M symbols, the first DMRS sequence occupies M1 symbols among the M symbols, the first sequence occupies M2 symbols among the M symbols, and M1, M2, and M are all positive integers. A transmit power of the first DMRS sequence is greater than a transmit power of the first sequence. In the foregoing technical solution, the transmitting end obtains the first information, where the first information includes the first DMRS sequence and the first sequence, the first DMRS sequence and the first sequence occupy different symbols, and the transmit power of the first DMRS sequence is greater than the transmit power of the first sequence, which helps reduce interference between the first DMRS sequence and the first sequence.

In a possible implementation, the first DMRS sequence is used for channel estimation and/or sensing, and the first sequence is used for sensing. In this way, a receiving end may perform channel estimation based on the first DMRS sequence, and perform sensing based on the first DMRS sequence and the first sequence, which helps the receiving end to perform relatively accurate channel estimation and sensing calculation.

In a possible implementation, the first information further includes first data, the first data and the first DMRS sequence occupy same subcarriers, and the receiving end can obtain a channel estimation result based on the first DMRS sequence, thereby further performing demodulation based on the channel estimation result to obtain the first data. Further, it may be set that the first data and the first sequence occupy a same time-frequency resource, which helps improve spectral efficiency.

In a possible implementation, that the transmitting end obtains the first DMRS sequence and the first sequence may be specifically as follows: The transmitting end obtains the first DMRS sequence; and performs repetition, frequency domain phase offset, or time domain cyclic shift on the first DMRS sequence to obtain the first sequence. In other words, the transmitting end generates the first sequence using the first DMRS sequence as a dominant sequence. In this way, the first DMRS sequence can be used for both channel estimation and sensing. For example, the transmitting end performs repetition, frequency domain phase offset, or time domain cyclic shift on a first preset sequence to obtain the first sequence, where the first preset sequence is a sequence corresponding to any symbol in the first DMRS sequence.

In a possible implementation, that the transmitting end transmits the first information may be specifically that the transmitting end transmits the first information through a first port and a second port. The first DMRS sequence corresponds to the first port. In other words, the transmitting end transmits the first DMRS sequence in the first information through the first port, and the first DMRS sequence is used for channel estimation corresponding to the first port.

In a possible implementation, the first information further includes a second DMRS sequence, M1 symbols occupied by the second DMRS sequence are the same as the M1 symbols occupied by the first DMRS sequence, and the first DMRS sequence and the second DMRS sequence occupy different subcarriers. The second DMRS sequence corresponds to the second port. In other words, the transmitting end transmits the second DMRS sequence in the first information through the second port, and the second DMRS sequence is used for channel estimation corresponding to the second port.

In a possible implementation, the transmit power of the first DMRS sequence is α1 times the transmit power of the first sequence, and α1 is a real number greater than 1. For example, α1 may be equal to 10 or 100. In the foregoing technical solution, the transmit power of the first DMRS sequence is set to α1 times the transmit power of the first sequence, which helps the receiving end to obtain a more accurate channel estimation result and a more accurate sensing result.

In a possible implementation, the first sequence includes a second sequence, the second sequence is used for phase noise estimation, a transmit power of the second sequence is α2 times a transmit power of a sequence other than the second sequence in the first sequence, and α2 is a real number greater than 1. For example, α2 = α1, that is, the transmit power of the first DMRS sequence is the same as the transmit power of the second sequence. It may be understood that a part of the first sequence (that is, the second sequence) carried on subcarriers may also be used as a phase tracking reference signal (phase tracking reference signal, PTRS) sequence, and a transmit power of the PTRS sequence is α2 times the transmit power of the first sequence. For example, the transmit power of the PTRS sequence is equal to the transmit power of the first DMRS sequence. In the foregoing technical solution, the second sequence is used by the receiving end to perform phase noise estimation, so that the receiving end can demodulate data more accurately. The transmit power of the second sequence is equal to the transmit power of the first DMRS sequence, thereby ensuring that content and a power carried in each symbol of the first sequence and the first DMRS sequence that are received by the receiving end are the same, so that the receiving end can obtain a more accurate sensing result.

In a possible implementation, the transmitting end further outputs configuration information, where the configuration information includes a power scaling factor. The power scaling factor indicates a multiple relationship α1 between the transmit power of the first DMRS sequence and the transmit power of the first sequence, and/or a multiple relationship α2 between the transmit power of the second sequence and a transmit power of a sequence other than the second sequence in the first sequence. In the foregoing technical solution, the transmitting end and the receiving end pre-negotiate the power scaling factor, which helps the receiving end to obtain a more accurate channel estimation result and a more accurate sensing result.

According to a second aspect, this application provides a communication method, and the method may be performed by a receiving end. For example, when an access network device transmits a signal to a terminal, the receiving end may be the terminal or a module in the terminal, for example, a chip. When the terminal transmits a signal to the access network device, the receiving end may be the access network device or a module in the access network device, for example, a chip.

The method includes: The receiving end obtains second information, where the second information is determined based on first information and a transmission channel, that is, the first information changes to the second information after being transmitted through the transmission channel. The first information includes a first DMRS sequence and a first sequence, the first information occupies M symbols, the first DMRS sequence occupies M1 symbols among the M symbols, the first sequence occupies M2 symbols among the M symbols, and M1, M2, and M are all positive integers. The first sequence is obtained by a transmitting end by performing repetition, frequency domain phase offset, or time domain cyclic shift on the first DMRS sequence, and a power of the first DMRS sequence is greater than a power of the first sequence. The receiving end performs calculation based on the first DMRS sequence, the first sequence, and the second information. For example, the first DMRS sequence is used for channel estimation and/or sensing, and the first sequence is used for sensing.

In a possible implementation, the first information further includes a second DMRS sequence, the second DMRS sequence corresponds to a second port, and the second DMRS sequence is used for channel estimation corresponding to the second port. The first DMRS sequence and the second DMRS sequence occupy a same symbol, and subcarriers occupied by the first DMRS sequence are different from subcarriers occupied by the second DMRS sequence.

In a possible implementation, the power of the first DMRS sequence is α1 times the power of the first sequence, or the power of the first DMRS sequence received by the receiving end is α1 times the power of the first sequence received by the receiving end, and α1 is a real number greater than 1. For example, α1 is a multiple of 10.

In a possible implementation, the first sequence includes a second sequence (or a PTRS sequence), the second sequence is used for phase noise estimation, and a power of the second sequence is α2 times a power of a sequence other than the second sequence in the first sequence. In other words, the power of the second sequence received by the receiving end is α2 times a power of a sequence other than the second sequence in the first sequence received by the receiving end, and α2 is a real number greater than 1. For example, α2 = α1, that is, the transmit power of the first DMRS sequence is the same as the transmit power of the second sequence.

In a possible implementation, the receiving end further obtains configuration information, where the configuration information includes a power scaling factor, and the power scaling factor indicates a multiple relationship α1 between the power of the first DMRS sequence and the power of the first sequence, and/or a multiple relationship α2 between the power of the second sequence and a power of a sequence other than the second sequence in the first sequence.

For technical effects that can be achieved by any aspect of the second aspect, refer to descriptions of beneficial effects in the first aspect. Details are not described herein again.

In a possible implementation of the first aspect or the second aspect, the first DMRS sequence includes a phase-modulated symbol.

In a first possible example, the phase-modulated symbol is generated through modulation based on a binary sequence. For example, the binary sequence includes one or more of the following: a Golden sequence, an m sequence, or a Golay sequence.

In a second possible example, the phase-modulated symbol is generated based on a ZC sequence. For example, the first DMRS sequence is a ZC sequence; and the first DMRS sequence is obtained by truncating the ZC sequence; or the first DMRS sequence is obtained by cyclically extending the ZC sequence.

In a possible implementation of the first aspect or the second aspect, the first DMRS sequence is a front-loaded DMRS sequence, and M1 is equal to 1; or the first DMRS sequence includes a front-loaded DMRS sequence and an additional DMRS sequence, M1 is greater than 1, and a spacing between the front-loaded DMRS sequence and the additional DMRS sequence is greater than or equal to one symbol.

In a possible implementation of the first aspect or the second aspect, when the first sequence is obtained by performing frequency domain phase offset on the first DMRS sequence, the first sequence and the first DMRS sequence satisfy the following formula in frequency domain: ${\overline{X}}_{m 2} \left(k\right) = {X}_{m 1} \left(k\right) {e}^{j 2 {πβ}_{m 2} k}$ where
X̅ₘ₂(k) is a sequence of the first sequence in frequency domain;
X̅ₘ₁(k) is a sequence of the first DMRS sequence in frequency domain;
k is a subcarrier index, and 0≤k<N1;
m1 and m2 are symbol indices, 0<m1≤M1, and 0<m2≤M2;
βₘ₂ is a phase offset; and
N1 is a quantity of subcarriers occupied by the first DMRS sequence.

In the foregoing technical solution, the transmitting end performs frequency domain phase offset on the first DMRS sequence to obtain the first sequence, to avoid that a cyclic prefix (cyclic prefix, CP) cannot be used by the receiving end for sensing when the CP is added to the first sequence, which helps improve resource utilization. In addition, compared with the time domain cyclic shift, the frequency domain phase offset has a simpler operation manner.

In a possible implementation of the first aspect or the second aspect, when the first sequence is obtained by performing time domain cyclic shift on the first DMRS sequence, the first sequence and the first DMRS sequence satisfy the following formula in time domain: ${\overline{x}}_{m 2} \left(s\right) = {x}_{m 1} \left(s-N1{β}_{m 2}\right)$ where
x̅ₘ₂(s) is a sequence of the first sequence in time domain;
xₘ₁(s-N1βₘ₂) is a sequence of the first DMRS sequence in time domain;
s is an index of time-domain sampling, and 0≤s<N1;
m1 and m2 are symbol indices, 0<m1≤M1, and 0<m2≤M2;
βₘ₂ is a phase offset; and
N1 is a quantity of subcarriers occupied by the first DMRS sequence.

In the foregoing technical solution, the transmitting end performs time domain cyclic shift on the first DMRS sequence to obtain the first sequence, to avoid that a CP cannot be used by the receiving end for sensing when the CP is added to the first sequence, which helps improve resource utilization.

According to a third aspect, an embodiment of this application provides a communication apparatus. The apparatus has a function of implementing the transmitting end in any one of the first aspect or the possible implementations of the first aspect.

The communication apparatus may also have a function of implementing the receiving end in any one of the second aspect or the possible implementations of the second aspect.

A function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transceiver module. The processing module is configured to support the apparatus in performing a corresponding function of the transmitting end in any one of the first aspect or the implementations of the first aspect, or performing a corresponding function of the receiving end in any one of the second aspect or the implementations of the second aspect. The transceiver module is configured to support communication between the apparatus and another communication device. For example, when the apparatus is the transmitting end, the apparatus may transmit first information. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to cause the apparatus to perform the method in any one of the first aspect or the possible implementations of the first aspect, or perform the method in any one of the second aspect or the possible implementations of the second aspect. Optionally, the apparatus further includes a communication interface, and the processor is coupled to the communication interface. For example, when the apparatus is a terminal or an access network device, the communication interface may be a transceiver or an input/output interface. When the apparatus is a chip included in the terminal or the access network device, the communication interface may be an input/output interface of the chip. Optionally, the transceiver may be a transceiver circuit, and the input/output interface may be an input/output circuit.

According to a fourth aspect, an embodiment of this application provides a chip system, including:
a processor and a memory, where the processor is coupled to the memory, the memory is configured to store a program or instructions, and when the program or the instructions are executed by the processor, the chip system is enabled to implement the method in any one of the first aspect or the possible implementations of the first aspect, or implement the method in any one of the second aspect or the possible implementations of the second aspect.

Optionally, the chip system further includes an interface circuit, and the interface circuit is configured to exchange code instructions with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a nontransitory processor, for example, a read-only memory ROM. The memory and the processor may be integrated on a same chip, or may be arranged on different chips respectively.

According to a fifth aspect, this application provides a computer-readable storage medium. The computer-readable storage medium stores a computer program or instructions. When the computer program or the instructions are executed by a communication apparatus, the communication apparatus is caused to perform the method in any one of the first aspect or the possible implementations of the first aspect, or the communication apparatus is caused to perform the method in any one of the second aspect or the possible implementations of the second aspect.

According to a sixth aspect, this application provides a computer program product. The computer program product includes a computer program or instructions. When the computer program or instructions are executed by a communication apparatus, the method in any one of the first aspect or the possible implementations of the first aspect is implemented, or the method in any one of the second aspect or the possible implementations of the second aspect is implemented.

According to a seventh aspect, an embodiment of this application provides a communication system. The communication system includes a transmitting end and a receiving end. Optionally, the transmitting end is configured to perform the method in any one of the first aspect or the possible implementations of the first aspect, and the receiving end is configured to perform the method in any one of the second aspect or the possible implementations of the second aspect.

For technical effects that can be achieved in any one of the third aspect to the seventh aspect, refer to descriptions of beneficial effects in the first aspect or the second aspect. Details are not described herein again.

### BRIEF DESCRIPTION OF DRAWINGS

FIG. 1 is a diagram of an architecture of a first communication system according to this application;
FIG. 2 is a diagram of an architecture of a second communication system according to this application;
FIG. 3 is a diagram of an architecture of a third communication system according to this application;
FIG. 4 is a schematic flowchart of signal processing according to this application;
FIG. 5A and FIG. 5B are diagrams of a transmit signal according to this application;
FIG. 6 is a diagram of a time-frequency resource occupied by first information according to this application;
FIG. 7 is a schematic flowchart of a communication method according to this application;
FIG. 8 is a diagram of generating a first sequence by a transmitting end according to this application;
FIG. 9A to FIG. 9E are diagrams of a first sequence according to this application;
FIG. 10 is a diagram of a fourier transform according to this application;
FIG. 11 is a diagram of performing zero-padding on a single-column sequence in delay-doppler domain according to this application;
FIG. 12 is a diagram of another fourier transform according to this application;
FIG. 13 is a diagram of sensing performed by a receiving end according to this application;
FIG. 14 is a diagram of a structure of a communication apparatus according to this application; and
FIG. 15 is a diagram of a structure of another communication apparatus according to this application.

### DESCRIPTION OF EMBODIMENTS

The following first describes related technical features in embodiments of this application. It should be noted that, these explanations are intended to make embodiments of this application easier to understand, but should not be construed as a limitation on the scope of protection claimed in this application.

### 1. Fourier transform (fourier transform)

Common fourier transform includes discrete fourier transform (discrete fourier transformation, DFT), fast fourier transform (fast fourier transformation, FFT), symplectic finite fourier transform (symplectic finite fourier transform, SFFT), inverse discrete fourier transform (inverse discrete fourier transform, IDFT), inverse fast fourier transform (inverse fast fourier transformation, IFFT), inverse symplectic finite fourier transform (inverse symplectic finite fourier transform, ISFFT), and the like. The DFT may be used to convert a time domain sequence into a frequency domain sequence, and the FFT is a quick calculation method for the DFT. The IDFT may be used to convert a frequency domain sequence into a time domain sequence, and the IFFT is a quick calculation method for the IDFT. The SFFT/FFT may be used to convert a sequence in time-frequency domain into a sequence in delay-doppler domain, and the ISFFT/IFFT may be used to convert a sequence in delay-doppler domain into a sequence in time-frequency domain.

### 2. Cyclic prefix (cyclic prefix, CP)

A transmitting end may insert a CP into a guard interval of a sequence to reduce inter-channel interference (inter-channel interference, ICI). Specifically, the transmitting end repeats a sampling point after each orthogonal frequency division multiplexing (orthogonal frequency division multiplexing, OFDM) symbol to the front of the OFDM symbol. In this way, it is ensured that a quantity of waveform periods included in a delay copy of the OFDM symbol is an integer in an FFT period, that is, orthogonality of subcarriers is ensured.

For example, for a signal sequence S whose length is J, S = [s_1, s_2, ..., s_J]. The CP refers to intercepting the last L elements (L represents a length of the CP) of the signal sequence S, and adding the intercepted sequence whose length is L to the front of the original sequence S. After the CP is added, a resulting sequence is: S_CP = [s_J-L, s_J-L+1, ..., s_J, s_1, s_2, ..., S_J]. Therefore, a signal of the CP part is [s_J-L, s_J-L+1, ..., s_J].

### 3. Demodulation reference signal (demodulation reference signal, DMRS)

In a data transmission process, the DMRS is used to demodulate uplink and downlink data.

DMRSs are widely present in various important physical channels, for example, a downlink physical broadcast channel (physical broadcast channel, PBCH), physical downlink control channel (physical downlink control channel, PDCCH), and physical downlink shared channel (physical downlink shared channel, PDSCH) and an uplink physical uplink control channel (physical uplink control channel, PUCCH) and physical uplink shared channel (physical uplink shared channel, PUSCH).

The DMRSs may be classified into a front-loaded DMRS (front-loaded DMRS) and an additional DMRS (additional DMRS). Front-loaded DMRS: In each scheduling time unit, a location at which the DMRS first appears should be as close as possible to a scheduling start point. Additional DMRS: In medium- and high-speed mobility scenarios, more DMRS pilot symbols further need to be inserted in scheduling duration to meet a requirement of estimation accuracy of channel time-variation. In a manner of combining a front-loaded DMRS and an additional DMRS, a pattern of each group of additional DMRS pilots is repetition of a front-loaded DMRS pilot, that is, each group of additional DMRS pilots and the front-loaded DMRS pilot occupy same subcarriers and a same quantity of OFDM symbols.

### 4. Phase tracking reference signal (phase tracking reference signal, PTRS)

In operating frequency bands of a communication system, a high frequency band (that is, a frequency band of 6 GHz or above, for example, 28 GHz, 39 GHz, 60 GHz, or 73 GHz) has become a research and development focus in the industry for meeting growing communication requirements due to abundant frequency band resources of the high frequency band. In addition to a large bandwidth and a highly integrated antenna array to implement high throughput, significant features of the high frequency band further include severe intermediate radio frequency distortion, such as phase noise and a carrier frequency offset (carrier frequency offset, CFO), and a doppler shift in the high frequency band is also greater, and the phase noise, the CFO, and the greater doppler shift each introduce a phase error, leading to performance degradation or even an operating failure in a high-frequency communication system. The phase noise is used as an example. As the frequency band increases, power spectral density of the phase noise is higher, and therefore impact on a received signal is greater. When a frequency band is high, deterioration of phase noise causes deterioration of demodulation performance of a received signal. Therefore, a PTRS sequence is introduced in an existing protocol for phase noise estimation, thereby improving demodulation performance in a phase noise condition.

### 5. Delay-doppler (delay-doppler, DD) domain

Similar to time-frequency domain, delay-doppler domain is used to describe channel conditions. Compared with time-frequency domain, delay-doppler domain may be used to reflect an obstacle and a moving speed of the obstacle in a scenario.

### 6. Resource block (resource block, RB)

In terms of frequency domain, a radio resource block includes a plurality of subcarriers. In terms of time domain, a radio resource block includes a plurality of OFDM symbols.

For example, a basic unit of air interface resource allocation is a physical resource block (physical RB, PRB). One PRB includes 12 consecutive subcarriers in frequency domain, and includes seven consecutive regular OFDM symbols in time domain. One subcarrier and one OFDM symbol may form one resource element (resource element, RE). For example, one PRB corresponds to a radio resource whose bandwidth is 180 kHz and duration is 0.5 ms. When a transmitting end inserts a CP into a guard interval of a sequence, the CP affects a quantity of OFDM symbols in one slot (slot). Under a normal CP, one slot contains seven OFDM symbols. Under an extended CP, one slot contains six OFDM symbols. It may be understood that the slot is not always 0.5 ms, and varies with a subcarrier spacing.

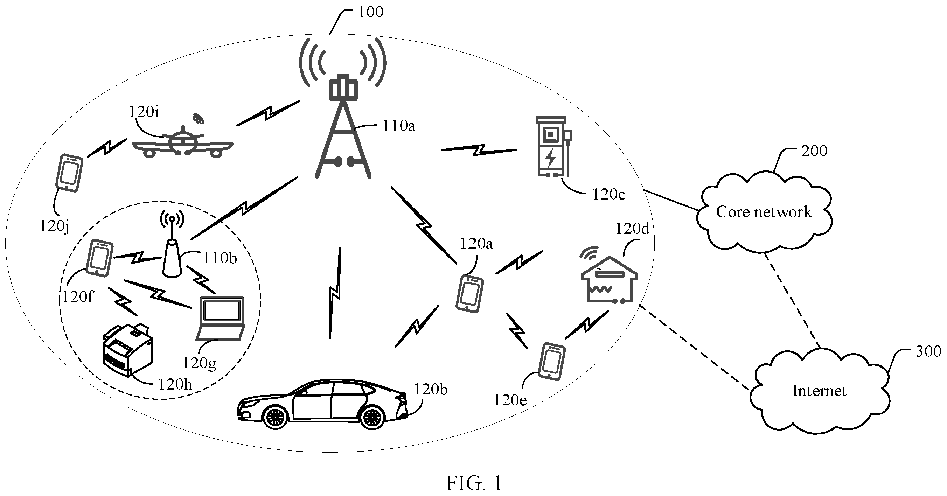

FIG. 1 is a diagram of an architecture of a first communication system to which an embodiment of this application is applied.

As shown in FIG. 1, the communication system includes a radio access network 100 and a core network 200. Optionally, the communication system may further include an internet 300. The radio access network 100 may include at least one access network device (for example, 110a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or some functions of the core network device and some functions of the access network device may be integrated into one physical device. The terminals may be connected to each other in a wired or wireless manner, and the access network devices may be connected to each other in a wired or wireless manner. FIG. 1 is only a diagram. The communication system may further include other network devices, for example, may further include a wireless relay device and a wireless backhaul device. This is not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of the base station, for example, may be a central unit (central unit, CU), or may be a distributed unit (distributed unit, DU). The CU performs functions of a radio resource control protocol and a packet data convergence protocol (packet data convergence protocol, PDCP) of the base station, and may further perform functions of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in embodiments of this application.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wear, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. Neither of a specific technology and a specific device form used for the terminal is limited in embodiments of this application.

The access network device and the terminal may be in fixed locations, or may be movable. The access network device and the terminal may be deployed on land, including an indoor device, an outdoor device, a handheld device, or a vehicle-mounted device; may be deployed on water; or may be deployed on an airplane, a balloon, and an artificial satellite in air. Application scenarios of the access network device and the terminal are not limited in embodiments of this application.

Roles of the access network device and the terminal may be relative. For example, a helicopter or an uncrewed aerial vehicle 120i in FIG. 1 may be configured as a mobile access network device. For a terminal 120j accessing the radio access network 100 through 120i, the terminal 120i is an access network device. However, for an access network device 110a, 120i is a terminal. In other words, 110a communicates with 120i by using a radio air interface protocol. Certainly, 110a and 120i may alternatively communicate with each other by using an interface protocol between access network devices. In this case, for 110a, 120i is also an access network device. Therefore, both the access network device and the terminal may be collectively referred to as communication apparatuses. 110a and 110b in FIG. 1 may be referred to as communication apparatuses having the functions of the access network device, and 120a to 120j in FIG. 1 may be referred to as communication apparatuses having the functions of the terminal.

Communication between an access network device and a terminal, between access network devices, or between terminals may be performed through a licensed spectrum, an unlicensed spectrum, or both a licensed spectrum and an unlicensed spectrum; and communication may be performed through a spectrum below 6 gigahertz (gigahertz, GHz), a spectrum above 6 GHz, or both a spectrum below 6 GHz and a spectrum above 6 GHz. Spectrum resources used for wireless communication are not limited in embodiments of this application.

In embodiments of this application, functions of the access network device may be alternatively executed by a module (for example, a chip) in the access network device, or may be alternatively executed by a control subsystem including the functions of the access network device. The control subsystem including the functions of the access network device may be a control center in the foregoing application scenarios such as the smart grid, the industrial control, the smart transportation, and the smart city. The function of the terminal may be alternatively performed by a module (for example, a chip or a modem) in the terminal, or may be performed by an apparatus including the function of the terminal.

In this application, the access network device sends a downlink signal or downlink information to the terminal. The downlink information is carried on a downlink channel. The terminal sends an uplink signal or uplink information to the access network device. The uplink information is carried on an uplink channel. To communicate with the access network device, the terminal needs to establish a wireless connection to a cell controlled by the access network device. The cell that establishes a wireless connection to the terminal is referred to as a serving cell of the terminal. When communicating with the serving cell, the terminal is further interfered by a signal from a neighboring cell.

In this application, a time-domain symbol may be an OFDM symbol, or may be a discrete fourier transform-spread-OFDM (discrete fourier transform-spread-OFDM, DFT-s-OFDM) symbol. Unless otherwise specified, all symbols in embodiments of this application are time domain symbols.

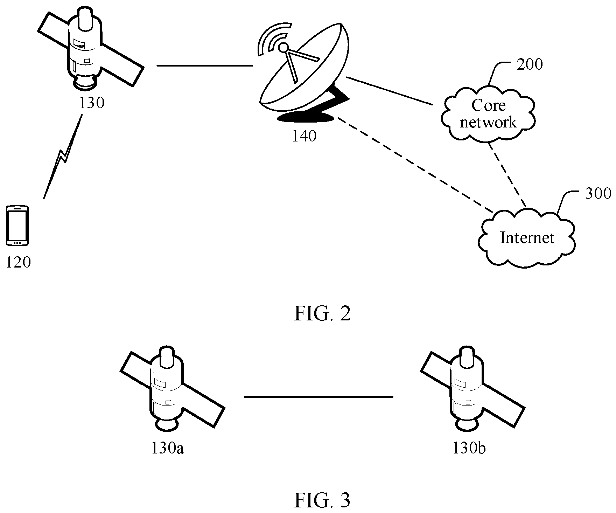

FIG. 2 is a diagram of an architecture of a second communication system to which an embodiment of this application is applied. The communication system is specifically a satellite communication system. The satellite communication system typically includes a terminal 120, a satellite 130, a ground station 140, and a core network 200. Optionally, the communication system may further include an internet 300. Based on different orbital altitudes, satellites 130 may be classified into the following three types: a geostationary earth orbit (geostationary earth orbit, GEO) satellite, also referred to as a synchronous orbit satellite or a high orbit satellite; a medium earth orbit (medium earth orbit, MEO) satellite, also referred to as a medium orbit satellite; and a low earth orbit (low earth orbit, LEO) satellite, also referred to as a low orbit satellite. For description of the terminal 120, refer to the description in the embodiment related to FIG. 1. For example, for uplink transmission, the terminal 120 sends data or signaling to the satellite 130. The satellite 130 forwards the data or signaling to the ground station 140. The ground station 140 then sends the data or the signaling to the core network 200 or to the internet 300.

FIG. 3 is a diagram of an architecture of a third communication system to which an embodiment of this application is applied. The communication system includes a satellite 130a and a satellite 130b, and the satellite 130a and the satellite 130b may communicate with each other. For description of the satellite, refer to the description in the embodiment related to FIG. 2. For example, communication between the satellite 130a and the satellite 130b may be classified into acquisition, tracking, and pointing (acquisition, tracking, and pointing, APT) and information transmission. The acquisition, tracking, and pointing refer to acquisition, pointing, and tracking between the satellite 130a and the satellite 130b. The acquisition refers to determining a direction of arrival of an incident signal. The pointing refers to adjusting a direction of a transmit wave to aim at a receiving direction. The tracking refers to continuously adjusting pointing and acquisition in an entire communication process. Further, to implement acquisition, tracking, and pointing, the satellite 130a (or the satellite 130b) may include an acquisition, tracking, and pointing module and an acquisition, tracking, and pointing transceiver module. To implement information transmission, the satellite 130a (or the satellite 130b) may include a communication module and a transceiver antenna.

It should be understood that the foregoing several communication systems are merely examples. During actual application, embodiments of this application may also be used in other communication systems.

When a transmitting end sends information to a receiving end, with reference to the communication system in FIG. 1, the transmitting end may be the terminal 120, and the receiving end may be the access network device 110; or the transmitting end may be the access network device 110, and the receiving end may be the terminal 120. With reference to the communication system in FIG. 2, the transmitting end may be the terminal 120, and the receiving end may be the satellite 130; or the transmitting end may be the satellite 130, and the receiving end may be the terminal 120. With reference to the communication system in FIG. 3, the transmitting end may be the satellite 130a, and the receiving end may be the satellite 130b; or the transmitting end may be the satellite 130b, and the receiving end may be the satellite 130a. For ease of description, the following uses an example in which the transmitting end is the terminal 120 and the receiving end is the access network device 110 for description.

In a possible manner, a waveform used by the terminal 120 to send information to the access network device 110 may be a single-carrier waveform, or may be a multi-carrier waveform. Single-carrier means that serially arranged transmit signals are convolved with a roll-off filter to form a transmit signal. Multi-carrier means that transmit signals are arranged in parallel to form a transmit signal through IFFT. For example, the single-carrier waveform may be a single-carrier-quadrature amplitude modulation (single-carrier-quadrature amplitude modulation, SC-QAM) waveform, and the multi-carrier waveform may be an OFDM waveform. In addition, a discrete fourier transform-spread-orthogonal frequency division multiplexing (discrete fourier transformation-spread-orthogonal frequency division multiplexing, DFT-s-OFDM) waveform is almost equivalent to a conventional single-carrier waveform. However, the DFT-s-OFDM waveform uses a multi-carrier implementation, and therefore is easy to be compatible with OFDM, but is still a single-carrier waveform in essence.

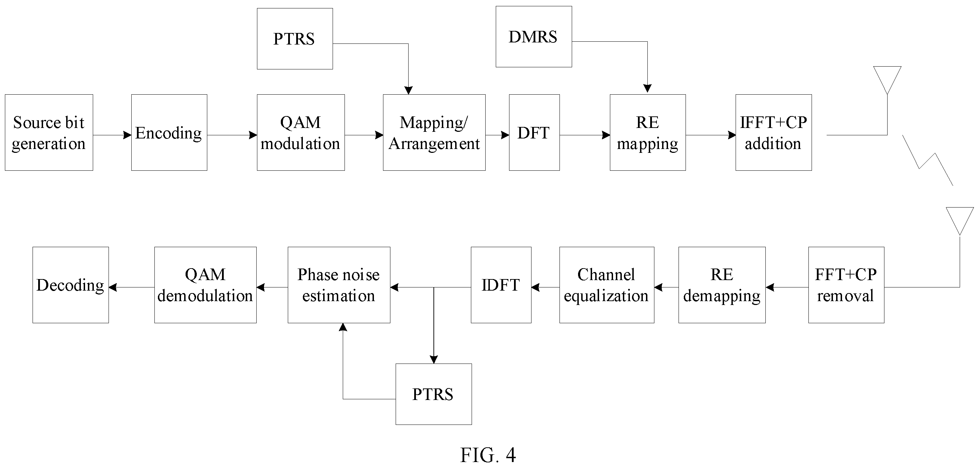

FIG. 4 is a schematic flowchart of possible signal processing of the access network device 110 and the terminal 120 when the access network device 110 and the terminal 120 communicate with each other using a DFT-s-OFDM waveform.

The terminal 120 generates source bits (that is, a data bit stream), encodes the source bits, and performs quadrature amplitude modulation (quadrature amplitude modulation, QAM) modulation on the encoded bits to obtain modulated data. The terminal 120 maps/arranges a generated PTRS sequence and the modulated data (which is mapping between data before DFT and the PTRS sequence), and performs a DFT operation (referred to as transform precoding (transform precoding)) on the mapped/arranged sequence. The sequence after the DFT and the generated DMRS sequence are mapped to an RE (that is, mapped to a specified frequency domain resource), IFFT is performed, and a CP is superimposed to obtain a final sequence. The final sequence is then sent to the access network device 110 through a channel.

The access network device 110 performs a process inverse to that performed by the terminal 120. To be specific, after receiving the sequence from the terminal 120, the access network device 110 removes the superimposed CP from the sequence, and performs FFT. The access network device 110 then performs RE demapping and channel equalization (which includes performing operations such as channel estimation based on a DMRS), and performs IDFT (which may also be referred to as inverse transform precoding) on a sequence for which channel equalization is completed. The access network device 110 then obtains the PTRS, performs phase noise estimation based on the obtained PTRS, performs phase noise compensation based on a phase noise estimation result, and performs QAM demodulation and decoding on a sequence after the phase noise compensation, thereby restoring a data bit stream sent by the terminal 120.

It may be understood that the foregoing related operations in FIG. 4 are merely used as an example. Optionally, other possible operations, for example, at least one of frequency domain spectrum shaping, serial-to-parallel conversion, parallel-to-serial conversion, a digital-to-analog converter (digital-to-analog converter, DAC), a power amplifier (power amplifier, PA), a low noise amplifier (low noise amplifier, LNA), and an analog-to-digital converter (analog-to-digital converter, ADC), may be further included.

In integrated sensing and communication, wireless signals transmitted from a transmitting end to a receiving end are required to meet both sensing requirements and communication requirements.

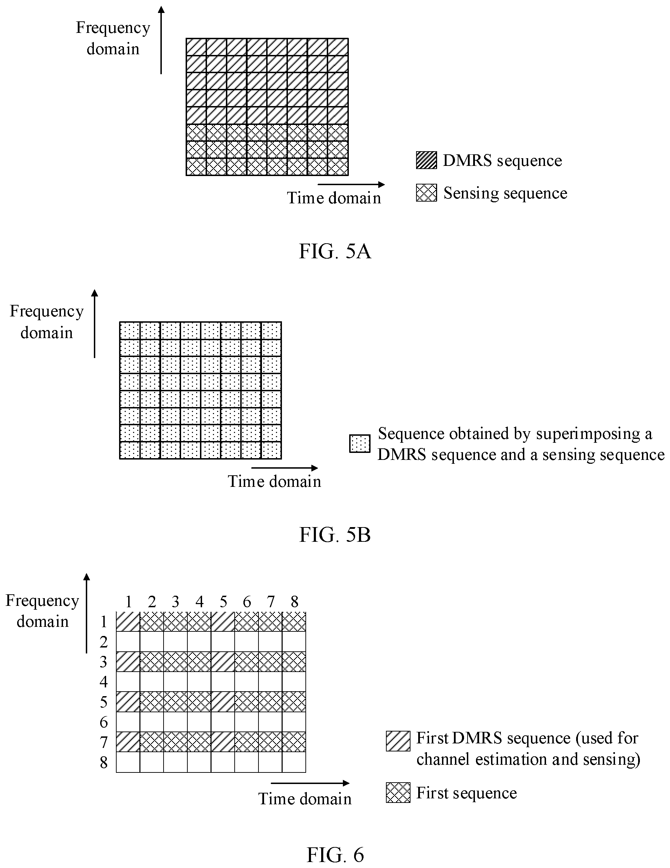

In a possible manner, the transmitting end sets that the communication sequence and the sensing sequence occupy different time-frequency resources in the transmit signal, respectively. For details, refer to FIG. 5A, so that there is no interference between the communication sequence and the sensing sequence. However, this manner wastes spectral efficiency to some extent. In another possible manner, the transmitting end simply superimposes the communication sequence and the sensing sequence that are located on the same time-frequency resource to obtain the transmit signal. For details, refer to FIG. 5B. However, interference exists between the communication sequence and the sensing sequence.

Therefore, this application provides a communication method, to improve spectral efficiency while reducing interference between a communication sequence and a sensing sequence.

The communication method may be implemented through interaction between a transmitting end and a receiving end. For example, a terminal sends information to an access network device. The transmitting end may be the terminal or a component (for example, a chip) in the terminal, and the receiving end may be the access network device or a component (for example, a chip) in the access network device.

Further, in the communication method, the transmitting end generates first information, where the first information includes a first DMRS sequence and a first sequence, the first DMRS sequence is used for channel estimation and sensing, the first sequence is used for sensing, and the first DMRS and the first sequence may be collectively referred to as a sensing sequence. The first DMRS sequence and the first sequence occupy different symbols. Therefore, interference between the first DMRS sequence and the first sequence is small, and the receiving end may perform relatively accurate sensing calculation based on received second information (that is, information after the first information passes through a transmission channel), the first DMRS sequence, and the first sequence. The receiving end may further perform relatively accurate channel estimation based on the second information and the first DMRS sequence.

Further, the first information further includes first data, and the first data and the first sequence occupy a same time-frequency resource. The first data and the first DMRS sequence occupy same subcarriers. Therefore, the receiving end can obtain a channel estimation result based on the first DMRS sequence, thereby further performing demodulation based on the channel estimation result to obtain the first data. In this way, this helps improve spectral efficiency.

To better explain embodiments of this application, the first information in this application and content included in the first information are first explained as follows:

The time-frequency resource occupied by the first information is denoted as a time-frequency resource 0, the time-frequency resource 0 includes M×N REs, M is a quantity of symbols occupied by the first information in time domain, N is a quantity of subcarriers occupied by the first information in frequency domain, and both M and N are positive integers.

A time-frequency resource occupied by the first DMRS sequence is denoted as a time-frequency resource 1, and the time-frequency resource 1 is a part of the time-frequency resource 0. The time-frequency resource 1 includes M1×N1 REs, where M1 is a quantity of symbols occupied by the first DMRS sequence, N1 is a quantity of subcarriers occupied by the first DMRS sequence, both M1 and N1 are positive integers, M1 is less than or equal to M, and N1 is less than or equal to N.

A time-frequency resource occupied by the first sequence is denoted as a time-frequency resource 2, and the time-frequency resource 2 is a part of the time-frequency resource 0. The time-frequency resource 0 includes M2×N1 REs, where M2 is a quantity of symbols occupied by the first sequence, N1 is a quantity of subcarriers occupied by the first sequence, M2 is a positive integer, and M2 is less than or equal to M. M2 symbols included in the time-frequency resource 2 do not overlap M1 symbols included in the time-frequency resource 1. For example, M1+M2 is less than or equal to M. N1 subcarriers included in the time-frequency resource 2 are the same as N1 subcarriers included in the time-frequency resource 1.

The first data also occupies the time-frequency resource 2. For a specific description, refer to the description that the first sequence occupies the time-frequency resource 2.

FIG. 6 is a diagram of a time-frequency resource occupied by first information according to an example of this application. Specifically, the time-frequency resource 0 includes 8×8 REs, that is, the first information occupies eight symbols in time domain and occupies eight subcarriers in frequency domain. The first DMRS sequence occupies the first and fifth symbols in time domain, and occupies the first, third, fifth, and seventh subcarriers in frequency domain. The first sequence occupies the second, third, fourth, sixth, seventh, and eighth symbols in time domain, and occupies the first, third, fifth, and seventh subcarriers in frequency domain. The first data occupies the second, third, fourth, sixth, seventh, and eighth symbols in time domain, and occupies the first, third, fifth, and seventh subcarriers in frequency domain. In other words, the first and fifth symbols and the first, third, fifth, and seventh subcarriers form the time-frequency resource 1, and the second, third, fourth, sixth, seventh, and eighth symbols and the first, third, fifth, and seventh subcarriers form the time-frequency resource 2.

It should be additionally noted that the first DMRS sequence is a DMRS sequence transmitted by the transmitting end through a first port (port), and the first DMRS sequence is used by the receiving end to obtain a channel estimation result corresponding to the first port.

In a possible manner, in addition to the first port, the transmitting end may further include a second port. In other words, the transmitting end may further transmit a second DMRS sequence through the second port, where the first DMRS sequence and the second DMRS sequence occupy a same symbol and different subcarriers. Alternatively, it is understood that the second DMRS sequence occupies a time-frequency resource 3, the time-frequency resource 3 is a part of the time-frequency resource 0, the time-frequency resource 3 includes M1×N2 REs, M1 symbols included in the time-frequency resource 3 are the same as the M1 symbols included in the time-frequency resource 1, N2 subcarriers included in the time-frequency resource 3 do not overlap N2 subcarriers included in the time-frequency resource 1, and N2 is a positive integer. For example, N1+N2 is equal to N. In a possible manner, the second information further includes second data, the second data and the second DMRS occupy same subcarriers, and the receiving end can obtain, based on the second DMRS sequence, a channel estimation result corresponding to the second port, and then demodulate the second data based on the channel estimation result corresponding to the second port. With reference to the example in FIG. 6, it may be considered that the second DMRS sequence occupies the first and fifth symbols in time domain, and occupies the second, fourth, sixth, and eighth subcarriers in frequency domain. In other words, the first and fifth symbols and the second, fourth, sixth, and eighth subcarriers form the time-frequency resource 3. The second data occupies the second, third, fourth, sixth, seventh, and eighth symbols in time domain, and occupies the second, fourth, sixth, and eighth subcarriers in frequency domain.

In a possible manner, the first information further includes a second sequence, the second sequence is used for phase noise estimation, and the second sequence may be considered as a phase tracking reference signal (phase tracking reference signal, PTRS) sequence. The second sequence may be specifically a part of the first sequence carried on subcarriers in the time-frequency resource 2. In other words, the first sequence includes the second sequence (a PTRS sequence). With reference to the example in FIG. 6, for example, a part of the first sequence carried on six REs that jointly correspond to the third subcarrier and the second, third, fourth, sixth, seventh, and eighth symbols may be alternatively used as the second sequence. The second sequence is used by the receiving end to improve demodulation performance in a phase noise condition.

An i^{th} symbol refers to an i^{th} row counted from left to right, a j^{th} subcarrier refers to a j^{th} column counted from top to bottom, and both i and j are positive integers. The description in this paragraph may also be applicable to a diagram of another time-frequency resource.

It should further be additionally noted that the first information occupies the time-frequency resource 0. Specifically, the transmitting end obtains the first information, maps the first information to the time-frequency resource 0, and sends the first information using the time-frequency resource 0. When the first information includes the first DMRS sequence, the first sequence, and the first data, the transmitting end maps the first DMRS sequence to the time-frequency resource 1, and maps the first sequence and the first data to the time-frequency resource 2. When the first information further includes the second DMRS sequence, the transmitting end further maps the second DMRS sequence to the time-frequency resource 3.

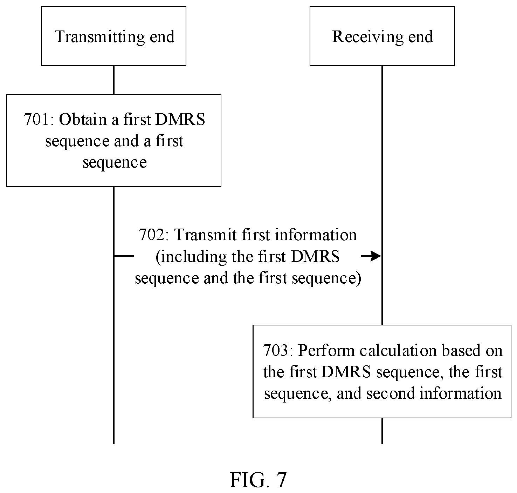

FIG. 7 is a schematic flowchart of a communication method according to an example of this application.

Step 701: A transmitting end obtains a first DMRS sequence and a first sequence.

The first DMRS sequence includes a phase-modulated symbol. Phase modulation is specifically a modulation form in which encoded information (that is, bits 0 and 1) is mapped to a phase, symbols after phase modulation have equal amplitudes, and different combinations of bits 0 and 1 are mapped to different phases. The phase modulation may be phase shift keying (binary phase shift keying, PSK), for example, binary phase shift keying (binary phase shift keying, BPSK), 4-PSK, 8-PSK, or 16-PSK, where n in n-PSK is an integer power of 2.

In a possible manner, the phase-modulated symbol (or the first DMRS sequence) is generated based on a ZC (Zadoff-Chu) sequence, that is, the transmitting end generates the first DMRS sequence based on the ZC sequence. The ZC sequence is also referred to as a Chu sequence or a Frank-Zadoff-Chu (FZC) sequence. The ZC sequence may be represented as ${x}_{q} \left(l\right) = {e}^{- \frac{jπql \left(l+c+2p\right)}{L}}$, where 0≤l<L, q is a root index of the ZC sequence, 0<q<L, *q* and L are relatively prime, *c*=L mod 2, *p* is an integer, and L is a length (a positive integer) of the ZC sequence. In a typical ZC sequence, L is a prime number, *c* = 1, and *p* = 0. That is, the ZC sequence is represented as: ${x}_{q} \left(m\right) = {e}^{- \frac{jπql \left(l+1\right)}{L}}$, where 0≤l<L.

Example 1: The first DMRS sequence is the ZC sequence.

Example 2: The first DMRS sequence is obtained by the transmitting end by cyclically extending the ZC sequence.

The transmitting end performs cyclic shift extension on the ZC sequence, and the obtained first DMRS sequence may be represented as x̃(l)=x_{q}(l mod L), where 0≤l<L', and L'>L. For example, assuming that L = 100 and L'=120, when l = 101, x̃(101)=x̃(1)=x_{q}(1), when l = 102, x̃(102) = x̃(2) = x_{q}(2), and by analogy, when l = 119, x̃(119)=x̃(19)=x_{q}(19).

Example 3: The first DMRS sequence is obtained by the transmitting end by truncating the ZC sequence. The transmitting end truncates the ZC sequence, and the obtained first DMRS sequence may be represented as x̃(l)=x_{q}(l), where 0≤1<L-J, and J is a positive integer.

In another possible manner, the phase-modulated symbol is generated based on a binary sequence. For example, the phase-modulated symbol may be obtained by the transmitting end by modulating the binary sequence. The binary sequence includes one or more of the following: a Golden sequence, an m sequence, or a Golay sequence.

The first sequence is obtained by the transmitting end by performing repetition, frequency domain phase offset, or time domain cyclic shift on the first DMRS sequence, or the first sequence and the first DMRS sequence are obtained by the transmitting end by performing repetition, time domain cyclic shift, or fourier transform on a second preset sequence.

The following describes Implementation 1 and Implementation 2.

Implementation 1: The first sequence is obtained by the transmitting end by performing repetition, frequency domain phase offset, or time domain cyclic shift on the first DMRS sequence.

For details, refer to the following step 701a and step 701b.

Step 701a: The transmitting end obtains the first DMRS sequence.

In a first possible manner, the transmitting end generates the first DMRS sequence based on a DMRS sequence configuration. Based on whether the transmitting end includes a configuration of an additional DMRS sequence, the following uses Example 1 and Example 2 for description.

Example 1: The transmitting end includes a configuration of a front-loaded DMRS sequence, but does not include the configuration of the additional DMRS sequence, that is, first information generated by the transmitting end includes the front-loaded DMRS sequence but does not include the additional DMRS sequence. For example, the front-loaded DMRS sequence occupies one symbol. The first DMRS sequence is the front-loaded DMRS sequence. Herein, M1 = 1.

Example 2: The transmitting end includes a configuration of a front-loaded DMRS sequence and the configuration of the additional DMRS sequence, that is, first information generated by the transmitting end includes the front-loaded DMRS sequence and the additional DMRS sequence.

For example, a spacing between the front-loaded DMRS sequence and the additional DMRS sequence in time domain is greater than or equal to one symbol.

For example, a quantity of symbols occupied by the front-loaded DMRS sequence is the same as a quantity of symbols occupied by the additional DMRS sequence.

For example, each of the front-loaded DMRS sequence and the additional DMRS sequence occupies one symbol, and the front-loaded DMRS sequence is the same as the additional DMRS sequence. For example, each of the front-loaded DMRS sequence and the additional DMRS sequence occupies a plurality of symbols, and DMRS sequences corresponding to any two symbols in a DMRS sequence including the front-loaded DMRS sequence and the additional DMRS sequence are the same.

The first DMRS sequence includes the front-loaded DMRS sequence and the additional DMRS sequence. Herein, M1 is greater than 1.

Example 3: The transmitting end includes a configuration of a front-loaded DMRS sequence and the configuration of the additional DMRS sequence, that is, first information generated by the transmitting end includes the front-loaded DMRS sequence and the additional DMRS sequence.

For example, a quantity of symbols occupied by the front-loaded DMRS sequence is the same as a quantity of symbols occupied by the additional DMRS sequence.

For example, each of the front-loaded DMRS sequence and the additional DMRS sequence occupies one symbol, and the front-loaded DMRS sequence is different from the additional DMRS sequence. The first DMRS sequence is the additional DMRS sequence. Herein, M1 = 1.

For example, each of the front-loaded DMRS sequence and the additional DMRS sequence occupies a plurality of symbols, in a DMRS sequence including the front-loaded DMRS sequence and the additional DMRS sequence, DMRS sequences corresponding to two symbols are different, and DMRS sequences corresponding to any two symbols in the additional DMRS sequence are the same. The first DMRS sequence is the additional DMRS sequence. Herein, M1 is greater than 1.

In a second possible manner, the transmitting end determines the first DMRS sequence according to protocol predefinition. The first DMRS sequence may be a front-loaded DMRS sequence, or the first DMRS sequence includes a front-loaded DMRS sequence and an additional DMRS sequence, or the first DMRS sequence is an additional DMRS sequence. Correspondingly, for the value of M, refer to the description in the first possible manner.

In this application, a sequence corresponding to a symbol is a single-column sequence carried on a time-frequency resource. That two sequences are the same may be specifically that the two sequences include same content (or elements), or it is understood that elements in two REs of the two sequences corresponding to a same subcarrier are the same. With reference to the example in FIG. 6, the first DMRS sequence includes the front-loaded DMRS sequence and the additional DMRS sequence, the front-loaded DMRS sequence occupies the first symbol, and the additional DMRS sequence occupies the fifth symbol. A sequence corresponding to the first symbol is the same as a sequence corresponding to the fifth symbol. Specifically, elements carried in four REs corresponding to the first symbol and the first, third, fifth, and seventh subcarriers are the same as elements carried in four REs corresponding to the fifth symbol and the first, third, fifth, and seventh subcarriers, for example, both being f(1), f(2), f(3), and f(4). That is, the sequence corresponding to the first symbol and the sequence corresponding to the fifth symbol are both {f(1), f(2), f(3), f(4)}.

Step 701b: The transmitting end performs repetition, frequency domain phase offset, or time domain cyclic shift on the first DMRS sequence to obtain the first sequence.

In a possible manner, the transmitting end performs repetition, frequency domain phase offset, or time domain cyclic shift on a first preset sequence to obtain the first sequence, where the first preset sequence is a sequence corresponding to an m1^{th} symbol of the M1 symbols in the first DMRS sequence, and 0<m1≤M1.

Example a: If the first DMRS sequence is a front-loaded DMRS sequence, when the front-loaded DMRS sequence occupies one symbol, the first preset sequence may be the front-loaded DMRS sequence.

Example b: If the first DMRS sequence includes a front-loaded DMRS sequence and an additional DMRS sequence, when the first DMRS sequence occupies M1 symbols, the first preset sequence is the sequence corresponding to the m1^{th} symbol of the M1 symbols.

Example c: If the first DMRS sequence is an additional DMRS sequence, when the additional DMRS sequence occupies one symbol, the first preset sequence is the additional DMRS sequence; or when the additional DMRS sequence occupies the M1 symbols and M1 is greater than 1, the first preset sequence is the sequence corresponding to the m1^{th} symbol of the M1 symbols. It may be understood that, in Example c, the DMRS sequence generated by the transmitting end further includes a front-loaded DMRS sequence, and the front-loaded DMRS sequence is not used to generate the first sequence. Further, M1+M2 is less than M.

Step 701b is explained separately based on different operation manners.

### 1. Repetition:

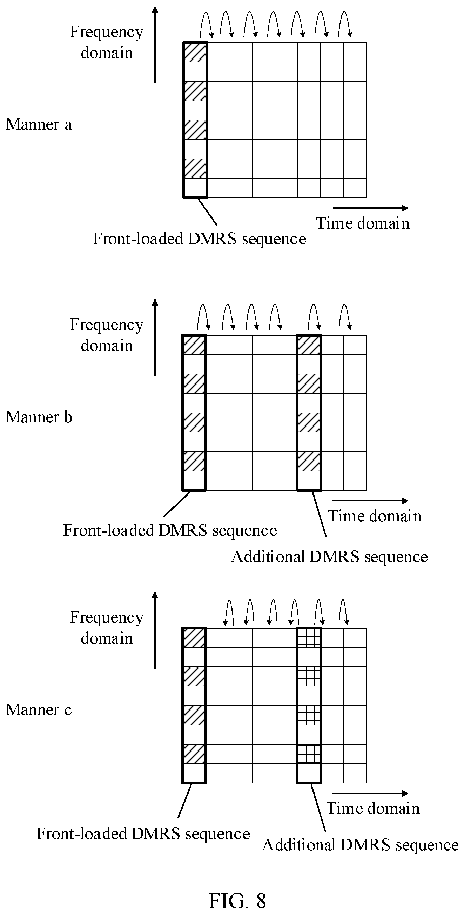

For example, the first sequence occupies M2 symbols, and the transmitting end may perform repetition on the first preset sequence M2 times to obtain the first sequence. Specifically, FIG. 8 is a diagram of generating a first sequence by a transmitting end. Manner a to Manner c correspond to the foregoing Example a to Example c, respectively.

For example, the first preset sequence is f(1), f(2), f(3), f(4), and the first sequence occupies three symbols. The transmitting end may repeat the first preset sequence three times, and the obtained first sequence is f(1), f(2), f(3), f(4), f(1), f(2), f(3), f(4), f(1), f(2), f(3), f(4). When sending the first information, the transmitting end may map the first sequence to three corresponding symbols, where each symbol corresponds to four subcarriers, that is, each symbol carries four elements in the first sequence.

### 2. Time domain cyclic shift:

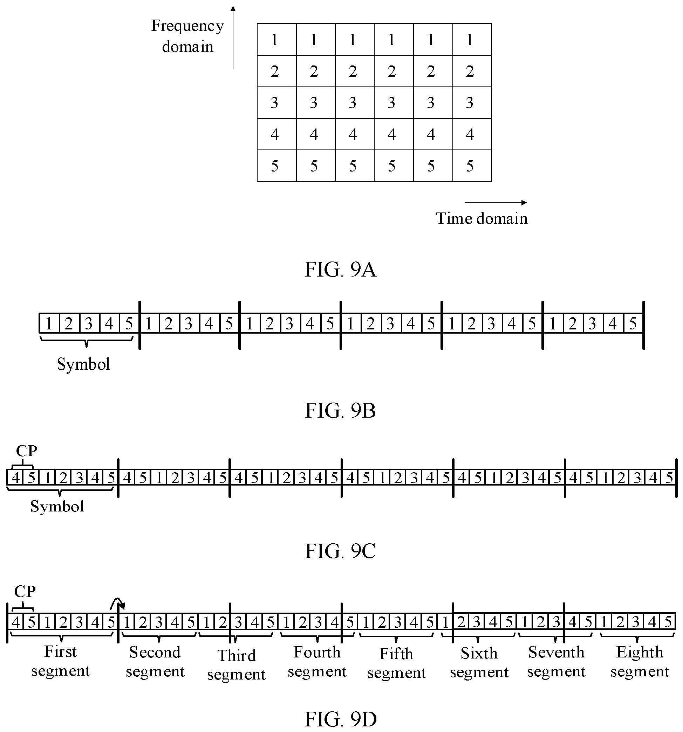

To better understand the time domain cyclic shift manner, the CP technology is further explained as follows:
In the foregoing repetition manner, the first sequence occupies M2 symbols, and sequences corresponding to any two of the M2 symbols are the same. After determining the first sequence, the transmitting end maps the first sequence to an RE, adds a CP to each symbol of the first sequence (referring to the procedure in FIG. 4), and then sends the first sequence with the CP added. The added CP cannot be used by the receiving end to perform sensing, and a problem of resource waste exists. Referring to the example of the first sequence shown in FIG. 9A to FIG. 9E, f(1), f(2), f(3), f(4), and f(5) are abbreviated as 1, 2, 3, 4, and 5 in FIG. 9A to FIG. 9E, respectively. FIG. 9A shows the first sequence with no CP added. The first sequence with no CP added occupies six symbols, and a sequence corresponding to each symbol is {f(1), f(2), f(3), f(4), f(5)}. Further, the six symbols are written in a form of a single-row sequence from a matrix form, and an obtained single-row sequence is shown in FIG. 9B. The transmitting end adds a CP to the first sequence to obtain a first sequence shown in FIG. 9C. In other words, a CP being f(4) and f(5) is added before each f(1). Further, the CP being f(4) and f(5) cannot be used by the receiving end for sensing.

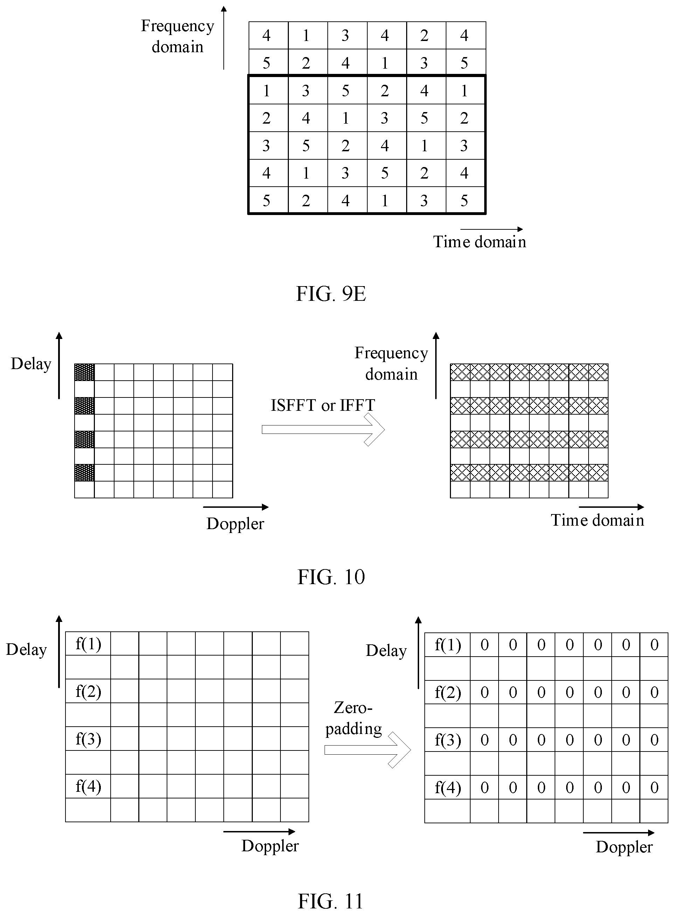

To resolve the foregoing problem, in this application, it is set that in the first sequence to which the CP is added, the CP may also be used by the receiving end to perform sensing, thereby improving resource utilization. A first sequence in FIG. 9D is obtained based on the first sequence in FIG. 9B. The first sequence still occupies six symbols, each symbol includes a CP, and CPs included in the two symbols may be different. For example, the first symbol includes seven elements: f(4), f(5), f(1), f(2), f(3), f(4), and f(5), and the first two elements f(4) and f(5) are a CP of the first symbol; the second symbol includes seven elements: f(1), f(2), f(3), f(4), f(5), f(1) and f(2). The first two elements f(1) and f(2) are a CP of the second symbol; and so on. In addition, the six symbols include eight segments, and each segment includes five elements: f(1), f(2), f(3), f(4), and f(5). The eight segments may be used by the receiving end to perform sensing, that is, the entire first sequence with the CP added may be used by the receiving end to perform sensing, which helps improve resource utilization. Further, the single-row sequence in FIG. 9D may be rewritten into a matrix form, and an obtained matrix form is shown in FIG. 9E. 6×5 elements in a bold rectangular box correspond to 6 symbols×5 subcarriers in the time-frequency resource, and the 6×5 elements may be superimposed by the transmitting end into a communication sequence.

Based on the foregoing analysis, this application provides a time domain cyclic shift manner. The transmitting end performs time domain cyclic shift on the first preset sequence to obtain the first sequence. After a CP is added to the first sequence, the CP may also be used by the receiving end for sensing, which helps improve resource utilization.

In a specific implementation, the transmitting end determines the first length based on a quantity of subcarriers occupied by a first sequence, an IFFT length, and a length of a CP of a time domain symbol. The transmitting end performs time domain cyclic shift based on the first preset sequence and the first length to obtain the first sequence. In a specific implementation, the transmitting end determines, based on the first preset sequence and the first length, an element on a subcarrier corresponding to each of the M2 symbols, and obtains the first sequence based on the element on the subcarrier corresponding to each of the M2 symbols.

For example, the first length may also be referred to as an equivalent CP length in Pre-DFT domain.

For example, when the length of the CP of the time domain symbol is 72, the IFFT length is 1024; or when the value of the length of the CP of the time domain symbol is 64, the IFFT length is 2048. For example, a ratio of the length of the CP of the time domain symbol to the IFFT length is 0.7.

In a specific implementation, the transmitting end may determine the first length based on Formula 1, the quantity of subcarriers occupied by the first sequence, the IFFT length, and the length of the CP of the time domain symbol. Formula 1 is as follows: ${S}_{CP} = N 1 \times {K}_{CP} / {K}_{FFT}$

*S_{CP}* is the first length; *N1* is a quantity of subcarriers occupied by the first sequence (or the first DMRS sequence), and referring to an example in FIG. 9A to FIG. 9E, N1 = 5; *K_{CP}* is the length of the CP of the time domain symbol; and *K_{FFT}* is the IFFT length.

The transmitting end performs time domain cyclic shift based on the first preset sequence and the first length to determine the sequence corresponding to each of the M2 symbols. In a specific implementation, the first sequence and the first preset sequence satisfy the following Formula 2 in frequency domain: ${\overline{x}}_{m 2} \left(s\right) = {x}_{m 1} \left(s-N1{β}_{m 2}\right)$ where
x̅ₘ₂(s) is a sequence of the first sequence in time domain;
xₘ₁(s-N1βₘ₂) is a sequence of the first DMRS sequence in time domain;
s is an index of time-domain sampling, and 0≤s<N1;
m1 and m2 are symbol indices, 0<m1≤M1, and 0<m2≤M2; and for example, m2 may be an integer in (0, M2];
βₘ₂ is a phase offset. For example, βₘ₂ = mod((m2-1)S_{CP},N1)/N1; and
N1 is a quantity of subcarriers occupied by the first DMRS sequence.

For example, a sequence corresponding to an m2^{th} symbol (that is, the m2^{th} symbol corresponds to N1 elements on subcarriers) may be represented as: xₘ₁(mod((m2 - 1)S_{CP}, N1) + 1), xₘ₁(mod((m2 - 1)S_{CP}, N1) + 2), ... , xₘ₁(N1), ... , xₘ₁(1), ..., xₘ₁(mod((m2 - 1)S_{CP}, N1)). For example, when m2 = 1, a sequence corresponding to the first symbol is x(1),x(2), ...,x(N1), and when m2 = 1, a sequence corresponding to the second symbol is x(S_{CP} + 1), x(S_{CP} + 2), ... ,x(M2), ... ,x(1), ... ,x(S_{CP}).

With reference to the example in FIG. 9A to FIG. 9E, the first preset sequence is a front-loaded DMRS sequence, the front-loaded DMRS sequence is f(1), f(2), f(3), f(4), f(5), and the first length is equal to 2. The transmitting end performs time domain cyclic shift based on the first preset sequence and the first length to determine that the sequence corresponding to the second symbol is f(3), f(4), f(5), f(1), f(2), that a sequence corresponding to the third symbol is f(5), f(1), f(2), f(3), f(4), and so on.

### 3. Frequency domain phase offset

The frequency domain phase offset refers to performing phase shift on a frequency domain sequence. Specifically, the transmitting end performs frequency domain phase offset on the frequency domain sequence to obtain a frequency domain sequence after the frequency domain phase offset. Subsequently, the transmitting end performs inverse fourier transform on the frequency domain sequence after the frequency domain phase offset to obtain the time sequence. The frequency domain sequence is specifically the first preset sequence. It may be understood that the obtained time sequence has an offset in time domain compared with a time domain sequence obtained by directly performing inverse fourier transform on the original frequency domain sequence by the transmitting end. Therefore, the transmitting end may implement time domain offset by performing frequency domain phase offset on the frequency domain sequence. It should be noted that the essence of the frequency domain phase offset in this application is to achieve equivalence to the foregoing time domain cyclic shift. Compared with the time domain cyclic shift, which helps reduce complexity.

In a specific implementation, the transmitting end determines a first length *S_{CP}* based on a quantity of subcarriers occupied by the first sequence, an IFFT length, and a length of a CP of a time domain symbol. For details, refer to descriptions in the embodiments related to the time domain cyclic shift. The transmitting end performs frequency domain phase offset based on the first preset sequence and the first length *S_{CP}* to determine the sequence corresponding to each of the M2 symbols. In a specific implementation, the first sequence and the first preset sequence satisfy the following Formula 3 in frequency domain: ${\overline{X}}_{m 2} \left(k\right) = {X}_{m 1} \left(k\right) {e}^{j 2 {πβ}_{m 2} k}$ where
X̅ₘ₂(k) is a sequence of the first sequence in frequency domain;
Xₘ₁(k) is a sequence (equivalent to the first preset sequence) of the first DMRS sequence in frequency domain;
k is a subcarrier index, and 0≤k<N1; and for example, k may be an integer in (0, N1];
m1 and m2 are symbol indices, 0<m1≤M1, and 0<m2≤M2; and for example, m2 may be an integer in (0, M2];
βₘ₂ is a phase offset. For example, βₘ₂ = mod((m2-1)S_{CP},N1)/N1; and
N1 is a quantity of subcarriers occupied by the first DMRS sequence.

Implementation 2: The first sequence and the first DMRS sequence are obtained by the transmitting end by performing repetition, time domain cyclic shift, or fourier transform on the second preset sequence. For details, refer to the following step 701A to step 701C.

Step 701A: The transmitting end performs repetition, time domain cyclic shift, or fourier transform on the second preset sequence to obtain an initial sequence.

The second preset sequence may be a sequence corresponding to a symbol in time-frequency domain, or a zero-padded sequence is performed on a single-column sequence in delay-doppler domain. The second preset sequence may be generated by the transmitting end, or may be pre-specified in a protocol.

The initial sequence is used to determine the first DMRS sequence and the first sequence. For example, the initial sequence includes the first DMRS sequence and the first sequence. A quantity of symbols occupied by the initial sequence is equal to M1+M2.

Step 701A is explained separately based on different operation manners.

### 1. Repetition:

The second preset sequence may be a sequence corresponding to a symbol in time-frequency domain.

For example, the initial sequence corresponds to M symbols, and the transmitting end may repeat the second preset sequence M-1 times to obtain the initial sequence. For example, the second preset sequence is f(1), f(2), f(3), f(4), f(5), and M = 3. The transmitting end may repeat the second preset sequence twice to obtain an initial sequence: f(1), f(2), f(3), f(4), f(5), f(1), f(2), f(3), f(4), f(5), f(1), f(2), f(3), f(4), f(5).

### 2. Time domain cyclic shift:

The second preset sequence may be a sequence corresponding to a symbol in time-frequency domain.

In a specific implementation, the transmitting end determines a first length based on a quantity of subcarriers occupied by a first sequence, an IFFT length, and a length of a CP of a time domain symbol. The transmitting end performs time domain cyclic shift based on the second preset sequence and the first length to obtain the initial sequence.

In a specific implementation, the transmitting end determines, based on the first preset sequence and the first length, an element on a subcarrier corresponding to each of the M symbols, and obtains the initial sequence based on the element on the subcarrier corresponding to each of the M symbols.

It may be understood that an implementation of the time domain cyclic shift is similar to that of the time domain cyclic shift in step 701b. For specific implementation, refer to the description in step 701b. A difference between the time domain cyclic shift and step 701b lies in that a sequence (that is, the initial sequence) corresponding to the M symbols is generated, and a sequence (that is, the first sequence) corresponding to the M2 symbols is generated in step 701b.

### 3. Fourier transform:

The single-column sequence in delay-doppler domain can achieve the following effects: a peak to average power ratio (peak to average power ratio, PAPR) is low, inter-doppler interference caused by a high speed approaches 0, and sensing complexity performed by the receiving end is low.

The transmitting end may generate a single-column sequence in delay-doppler domain. The transmitting end performs zero-padding in a back position of the single-column sequence in delay-doppler domain to obtain a zero-padded sequence. The transmitting end then performs fourier transform on the zero-padded sequence to obtain a plurality of repeated single-column sequences in time-frequency domain, that is, each symbol corresponds to a same sequence. For details, refer to FIG. 10. A zero-padded sequence in delay-doppler domain is the second preset sequence, each of a plurality of repeated single-column sequences in time-frequency domain is the initial sequence, and fourier transform may be specifically ISFFT or IFFT.

Further, a quantity of elements included in the single-column sequence in delay-doppler domain is less than a total quantity of elements that can be carried in a column in which the single-column sequence is located. As shown in FIG. 11, when the transmitting end performs zero-padding on the single-column sequence in delay-doppler domain subsequently, specifically, the transmitting end performs zero-padding on rows corresponding to a plurality of elements included in the single-column sequence in delay-doppler domain. With reference to the example in FIG. 11, the delay-doppler domain includes eight rows, and each column in delay-doppler domain can carry eight elements. The single-column sequence is f(1), f(2), f(3), f(4). f(1), f(2), f(3), and f(4) occupy the first, third, fifth, and seventh rows in delay-doppler domain, respectively. Specifically, zero-padding is padding zeros in the first, third, fifth, and seventh rows.

Step 701B: The transmitting end determines the first DMRS sequence and the first sequence based on the initial sequence.

The initial sequence occupies N1 subcarriers×M symbols. The transmitting end maps a part of sequence in the initial sequence to N1 subcarriers×M1 symbols, where the part of sequence is used as the first DMRS sequence; and maps another part of sequence in the initial sequence to N1 subcarriers×M2 symbols, where the other part of sequence is used as the first sequence.

Step 702: The transmitting end transmits the first information, and correspondingly, the receiving end obtains second information.

For example, the transmitting end is a terminal, and the receiving end is an access network device. The transmitting end may be the terminal or a component (for example, a chip) in the terminal, and the receiving end may be the access network device or a component (for example, a chip) in the access network device. When the transmitting end is a chip in the terminal, the transmitting end may output the first information through an output interface corresponding to the chip. When the transmitting end is the terminal, the terminal may send the first information through an antenna of the terminal. When the receiving end is a chip in the access network device, the receiving end may obtain the second information through an input interface corresponding to the chip. When the transmitting end is the access network device, the access network device may receive the second information through an antenna of the access network device.

Optionally, before step 702, the transmitting end determines a transmit power of the first DMRS sequence and a transmit power of the first sequence, and transmits the first DMRS sequence and the first sequence based on the transmit power of the first DMRS sequence and the transmit power of the first sequence. For example, the transmit power of the first DMRS sequence is α1 times the transmit power of the first sequence, and α1 is a real number greater than 1. For example, α1 is a multiple of 10. For example, α1 is equal to 10 or 100.

In a possible manner, the transmitting end knows the transmit power of the first sequence and a power scaling factor, and determines the transmit power of the first DMRS sequence based on the transmit power of the first sequence and the power scaling factor. Alternatively, the transmitting end knows the transmit power of the first DMRS sequence and a power scaling factor, and determines the transmit power of the first sequence based on the transmit power of the first DMRS sequence and the power scaling factor. The power scaling factor indicates a multiple relationship α1 between the transmit power of the first DMRS sequence and the transmit power of the first sequence. Alternatively, it is understood that the power scaling factor includes the multiple relationship α1.

In a possible manner, the first sequence includes a second sequence (that is, a PTRS sequence), and the transmitting end may determine transmit powers of the second sequence and a sequence (denoted as a third sequence) other than the second sequence in the first sequence, and then transmit the second sequence and the third sequence based on the transmit power of the second sequence and the transmit power of the third sequence, respectively. For example, the transmit power of the second sequence is α2 times the transmit power of the third sequence, and α2 is a real number greater than 1. For example, α2 is a multiple of 10. For example, α2 is equal to 10 or 100. For example, because content and transmit powers of sequences used for sensing on different symbols need to be consistent, the transmitting end may set the transmit power of the second sequence to be the same as the transmit power of the first DMRS sequence, that is, α1 equal to α2, which helps improve sensing accuracy. It should be noted that, when the first sequence includes the second sequence, the transmit power of the first DMRS sequence is α1 times the transmit power of the third sequence.

For example, the power scaling factor further indicates a multiple relationship α2 between the transmit power of the second sequence and the transmit power of the third sequence. Alternatively, it is understood that the power scaling factor includes the multiple relationship α1 and the multiple relationship α2, and the power scaling factor indicates that the transmit power of the first DMRS sequence is α1 times the transmit power of the third sequence and that the transmit power of the second sequence is α2 times the transmit power of the third sequence.

In a possible manner, the transmitting end further determines the transmit power of the second DMRS sequence, and transmits the second DMRS sequence based on the transmit power of the second DMRS sequence. For example, the transmit power of the second DMRS sequence is α3 times the transmit power of the first sequence, and α3 is a real number greater than 1. For example, α3 is a multiple of 10. For example, α3 is equal to 10 or 100. For example, the transmit power of the first DMRS sequence is the same as the transmit power of the second DMRS sequence, that is, α1 is equal to α3. For example, the power scaling factor further indicates a multiple relationship α3 between the transmit power of the second DMRS sequence and the transmit power of the first sequence. Alternatively, it is understood that the power scaling factor further includes the multiple relationship α3. When the first sequence includes the second sequence, the "first sequence" in this paragraph may be replaced with the "third sequence".

Step 703: The receiving end performs calculation based on the first DMRS sequence, the first sequence, and the second information.

Optionally, the receiving end performs sensing based on the first DMRS sequence, the first sequence, and the second information to obtain a sensing result.

The receiving end may obtain the first DMRS sequence and the first sequence in advance. Optionally, the first sequence further includes the second sequence (that is, the PTRS sequence). For a manner in which the receiving end obtains the first DMRS sequence and the first sequence, refer to the description in step 701. Details are not described herein again. Optionally, the first information further includes the second DMRS sequence, and the receiving end may further obtain the second DMRS sequence in advance.

It may be understood that the receiving end and the transmitting end agree in advance on a manner of generating the first information and a sequence included in the first information. For example, when the receiving end performs time domain cyclic shift on the first DMRS sequence to generate the first sequence, the transmitting end also performs time domain cyclic shift on the first DMRS sequence to generate the first sequence. When the receiving end performs frequency domain phase offset on the first DMRS sequence to generate the first sequence, the transmitting end also performs frequency domain phase offset on the first DMRS sequence to generate the first sequence. When the receiving end performs fourier transform on the second preset sequence to generate the first sequence and the first DMRS sequence, the receiving end also performs fourier transform on the second preset sequence to generate the first sequence and the first DMRS sequence. For another example, the receiving end and the transmitting end pre-negotiate that the first information includes the first sequence, the first DMRS sequence, the first data, and the second DMRS sequence, and the first sequence includes the second sequence. For example, the transmitting end sends first configuration information to the receiving end in advance, where the first configuration information includes the manner of generating the first information and the sequence included in the first information.

The second information is determined based on the first information and the transmission channel. Specifically, after being output by the transmitting end, the first information is transmitted to the receiving end through a channel between the transmitting end and the receiving end, and the receiving end obtains the second information. For example, for a relationship between the first information, the second information, and the transmission channel, refer to the following Formula 4: $y ′ = h \times y + noise$

*y* is the first information, *y*' is the second information, h is the transmission channel, and noise is noise in the transmission channel.

It may be understood that Formula 4 may also be represented as *y*' = h × α1 × *s* + noise, where *s* is the sensing sequence on the time-frequency resource 1, and *α*1 × *s* is the DMRS sequence (that is, the first DMRS sequence) on the time-frequency resource 1. The receiving end may obtain a channel estimation result based on a formula *h* = *y*'/(α1 × *s*), or the receiving end may obtain a sensing result based on a formula *h* × *s* = *y*'/α1.

In a possible manner, the transmitting end may further agree on a power scaling factor with the receiving end in advance. For example, the transmitting end outputs second configuration information, and correspondingly, the receiving end obtains the second configuration information, where the second configuration information includes the power scaling factor. The receiving end may determine, based on the power scaling factor, the multiple relationship α1 between the power of the first DMRS sequence and the power of the first sequence, and/or the multiple relationship α2 between the power of the second sequence and a power of a sequence (that is, the third sequence) other than the second sequence in the first sequence. The first configuration information and the second configuration information may be carried in a same message or different messages.

When the receiving end performs sensing based on the first DMRS sequence, the first sequence, and the second information, specifically, the receiving end performs sensing based on the first DMRS sequence, the first sequence, the multiple relationship α2, and the second information.

In a possible manner, the receiving end may perform, based on the multiple relationship α1, power reduction on the sequence of the second information carried in the time-frequency resource 1, and then sense the sequence of the second information carried in the time-frequency resource 2, the sequence carried in the time-frequency resource 1 after the power reduction, the first DMRS sequence, and the first sequence to obtain a sensing result.

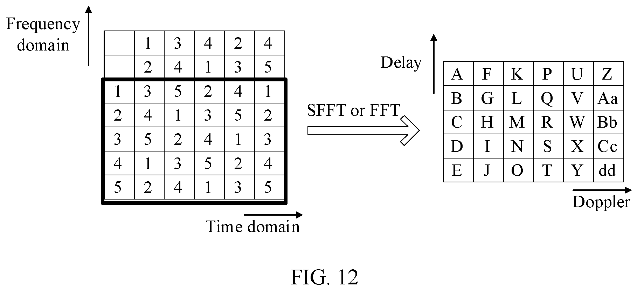

It should be additionally noted that when the receiving end performs time domain cyclic shift on the first DMRS sequence to obtain the first sequence, the receiving end may further perform fourier transform (for example, SFFT or FFT) on the first DMRS sequence and the first sequence (the first DMRS sequence and the first sequence may be collectively referred to as a sent sensing sequence), to obtain a sent sensing sequence in delay-doppler domain. With reference to FIG. 9E, SFFT or FFT may be performed on the sent sensing sequence to obtain the sent sensing sequence in delay-doppler domain. For the sent sensing sequence in delay-doppler domain, refer to a diagram of still other fourier transform shown in FIG. 12.

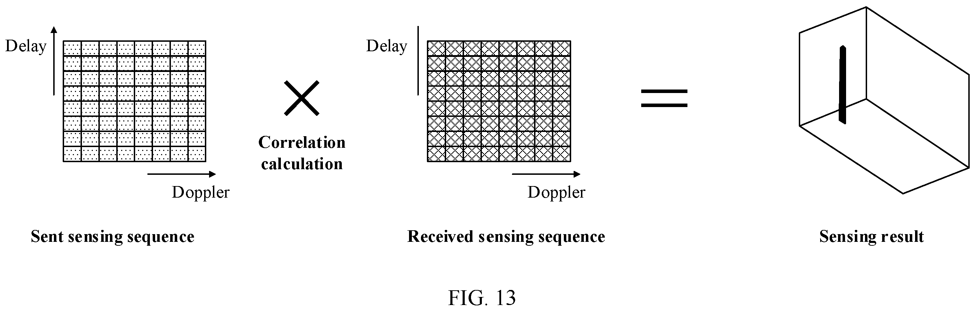

Further, the receiving end performs sensing based on the sent sensing sequence in delay-doppler domain, the multiple relationship α1, and the second information to obtain a sensing result. In a specific implementation, the receiving end performs, based on the multiple relationship α1, power reduction on the sequence of the second information carried in the time-frequency resource 1, performs SFFT or FFT on the sequence of the second information carried in the time-frequency resource 2 and the sequence carried in the time-frequency resource 1 after power reduction to obtain a received sensing sequence in delay-doppler domain, and then performs sensing based on the sent sensing sequence in delay-doppler domain and the received sensing sequence in delay-doppler domain to obtain a sensing result. For example, the receiving end performs correlation calculation on the sent sensing sequence in delay-doppler domain and the received sensing sequence in delay-doppler domain to obtain a sensing result, as shown in FIG. 13.

In addition, the receiving end further performs any one or more of the following Operation 1 to Operation 3:

Operation 1: The receiving end performs, based on the first DMRS sequence, channel estimation corresponding to the first port. Specifically, the receiving end performs, based on the pre-obtained first DMRS sequence, the transmit power of the first DMRS sequence, and the received second information, the channel estimation corresponding to the first port. Subsequently, the receiving end may demodulate the first data based on a channel estimation result corresponding to the first port.

Operation 2: The receiving end performs, based on the second DMRS sequence, channel estimation corresponding to the second port. Specifically, the receiving end performs, based on the pre-obtained second DMRS sequence, the transmit power of the second DMRS sequence, and the received second information, channel estimation corresponding to the second port. The receiving end may then demodulate the second data based on a channel estimation result corresponding to the second port.

Operation 3: The receiving end performs phase noise estimation based on the second sequence. Specifically, the receiving end determines the second sequence from the pre-obtained first sequence, and performs phase noise estimation based on the transmit power of the second sequence and the second information. The receiving end may then perform phase noise compensation based on a phase noise estimation result.

In the foregoing technical solution, the transmitting end generates the first information, where the first information includes the first DMRS sequence and the first sequence, the first DMRS sequence and the first sequence occupy different symbols, and the first DMRS sequence is used for both channel estimation and sensing. Therefore, the receiving end may perform channel estimation based on the first DMRS sequence, and perform sensing based on the first DMRS sequence and the first sequence. Because the first DMRS sequence and the first sequence occupy different symbols, interference between the first DMRS sequence and the first sequence is low. In addition, the first data may further be sent on the time-frequency resource occupied by the first sequence, and the receiving end may obtain relatively accurate first data from the time-frequency resource based on a channel estimation result, thereby helping improve spectral efficiency.

Embodiments described in this specification may be independent solutions, or may be combined based on internal logic. All of these solutions fall within the scope of protection of this application.

In the foregoing embodiments provided in this application, the method provided in embodiments of this application is separately described from a perspective of interaction between the devices. To implement the functions in the method provided in the foregoing embodiments of this application, each of the transmitting end and the receiving end may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

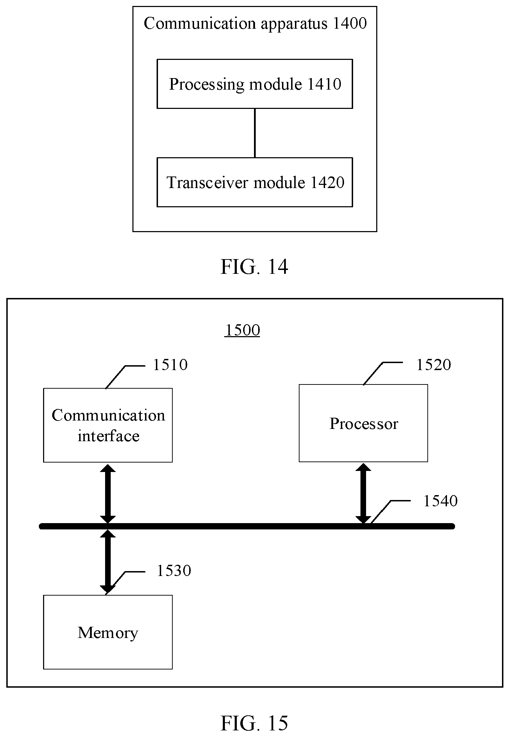

Based on the foregoing content and a same concept, FIG. 14 and FIG. 15 are diagrams of structures of possible communication apparatuses according to this application. These communication apparatuses may be configured to implement functions of a transmitting end or a receiving end in the foregoing method embodiments. Therefore, beneficial effects of the foregoing method embodiments can also be implemented. In this application, the communication apparatus may be the terminal 120 shown in FIG. 1, or may be the access network device 110 shown in FIG. 1, or may be a module used in the terminal 120 or the access network device 110. The communication apparatus may be the terminal 120 shown in FIG. 2, or may be the satellite 130 shown in FIG. 2 or FIG. 3, or may be a module used in the terminal 120 or the satellite 130.

As shown in FIG. 14, the communication apparatus 1400 includes a processing module 1410 and a transceiver module 1420.

When the communication apparatus 1400 is configured to implement a function of the transmitting end in the method embodiment shown in FIG. 7:

The processing module 1410 is configured to obtain a first DMRS sequence and a first sequence, where the first sequence is obtained by performing repetition, frequency domain phase offset, or time domain cyclic shift on the first DMRS sequence. The transceiver module 1420 is configured to transmit first information, where the first information includes the first DMRS sequence and the first sequence, the first information occupies M symbols, the first DMRS sequence occupies M1 symbols among the M symbols, the first sequence occupies M2 symbols among the M symbols, and M1, M2, and M are all positive integers. A transmit power of the first DMRS sequence is greater than a transmit power of the first sequence.

When the communication apparatus 1400 is configured to implement a function of the receiving end in the method embodiment shown in FIG. 7:

The transceiver module 1420 is configured to obtain second information, where the second information is determined based on first information and a transmission channel, the first information includes a first DMRS sequence and a first sequence, the first information occupies M symbols, the first DMRS sequence occupies M1 symbols among the M symbols, the first sequence occupies M2 symbols among the M symbols, M1, M2, and M are all positive integers, the first sequence is obtained by performing repetition, frequency domain phase offset, or time domain cyclic shift on the first DMRS sequence, and a power of the first DMRS sequence is greater than a power of the first sequence. The processing module 1410 is configured to perform calculation based on the first DMRS sequence, the first sequence, and the second information.

FIG. 15 shows an apparatus 1500 according to an embodiment of this application. The apparatus shown in FIG. 15 may be an implementation of a hardware circuit of the apparatus shown in FIG. 14. The apparatus is applicable to the flowcharts shown above, and performs functions of the first terminal device or the second terminal device in the foregoing method embodiments. For ease of description, FIG. 15 shows only main components of the apparatus.

The apparatus 1500 shown in FIG. 15 includes a communication interface 1510, a processor 1520, and a memory 1530. The memory 1530 is configured to store program instructions and/or data. The processor 1520 may cooperate with the memory 1530. The processor 1520 may execute the program instructions stored in the memory 1530. When the instructions or the program stored in the memory 1530 is executed, the processor 1520 is configured to perform an operation performed by the processing module 1410 in the foregoing embodiment, and the communication interface 1510 is configured to perform an operation performed by the transceiver module 1420 in the foregoing embodiment.

The memory 1530 is coupled to the processor 1520. The coupling in this embodiment of this application may be an indirect coupling or a communication connection between apparatuses, units, or modules in an electrical form, a mechanical form, or another form, and is used for information exchange between the apparatuses, the units, or the modules. At least one of the memories 1530 may be included in the processor 1520.

In this embodiment of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver integrated with a transceiver function or a communication interface.

The apparatus 1500 may further include a communication line 1540. The communication interface 1510, the processor 1520, and the memory 1530 may be connected to each other by the communication line 1540. The communication line 1540 may be a peripheral component interconnect (peripheral component interconnect, PCI for short) bus, an extended industry standard architecture (extended industry standard architecture, EISA for short) bus, or the like. The communication line 1540 may be classified into an address bus, a data bus, a control bus, and the like. For ease of representation, only one thick line is used to represent the bus in FIG. 15, but this does not mean that there is only one bus or only one type of bus.

It may be understood that, in this embodiment of this application, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
obtaining a first demodulation reference signal DMRS sequence and a first sequence, wherein the first sequence is obtained by performing repetition, frequency domain phase offset, or time domain cyclic shift on the first DMRS sequence; and
transmitting first information, wherein the first information comprises the first DMRS sequence and the first sequence, the first information occupies M symbols, the first DMRS sequence occupies M1 symbols among the M symbols, the first sequence occupies M2 symbols among the M symbols, and M1, M2, and M are all positive integers, wherein
a transmit power of the first DMRS sequence is greater than a transmit power of the first sequence.

2. The method according to claim 1, wherein
the first DMRS sequence is used for channel estimation and/or sensing, and the first sequence is used for sensing.

3. The method according to claim 1 or 2, wherein the first DMRS sequence comprises a phase-modulated symbol.

4. The method according to claim 3, wherein the phase-modulated symbol is generated through modulation based on a binary sequence, and the binary sequence comprises one or more of the following: a Golden sequence, an m sequence, or a Golay sequence.

5. The method according to claim 3, wherein the phase-modulated symbol is generated based on a ZC sequence.

6. The method according to claim 5, wherein that the phase-modulated symbol is generated based on the ZC sequence comprises:
the first DMRS sequence is the ZC sequence;
the first DMRS sequence is obtained by truncating the ZC sequence; or
the first DMRS sequence is obtained by cyclically extending the ZC sequence.

7. The method according to any one of claims 1 to 6, wherein
the first DMRS sequence is a front-loaded DMRS sequence, and M1 is equal to 1; or
the first DMRS sequence comprises a front-loaded DMRS sequence and an additional DMRS sequence, M1 is greater than 1, and a spacing between the front-loaded DMRS sequence and the additional DMRS sequence is greater than or equal to one symbol.

8. The method according to any one of claims 1 to 7, wherein when the first sequence is obtained by performing frequency domain phase offset on the first DMRS sequence, the first sequence and the first DMRS sequence satisfy the following formula in frequency domain: ${\overline{X}}_{m 2} \left(k\right) = {X}_{m 1} \left(k\right) {e}^{j 2 {πβ}_{m 2} k}$ wherein
X̅ₘ₂(k) is a sequence of the first sequence in frequency domain;
Xₘ₁(k) is a sequence of the first DMRS sequence in frequency domain;
k is a subcarrier index, and 0≤k<N1;
m1 and m2 are symbol indices, 0<m1≤M1, and 0<m2≤M2;
βₘ₂ is a phase offset; and
N1 is a quantity of subcarriers occupied by the first DMRS sequence.

9. The method according to any one of claims 1 to 7, wherein when the first sequence is obtained by performing time domain cyclic shift on the first DMRS sequence, the first sequence and the first DMRS sequence satisfy the following formula in time domain: ${\overline{x}}_{m 2} \left(s\right) = {x}_{m 1} \left(s-N1{β}_{m 2}\right)$ wherein
x̅ₘ₂(s) is a sequence of the first sequence in time domain;
xₘ₁(s-N1βₘ₂) is a sequence of the first DMRS sequence in time domain;
s is an index of time-domain sampling, and 0≤s<N1;
m1 and m2 are symbol indices, 0<m1≤M1, and 0<m2≤M2;
βₘ₂ is a phase offset; and
N1 is a quantity of subcarriers occupied by the first DMRS sequence.

10. The method according to any one of claims 1 to 9, wherein the transmitting the first information comprises:
transmitting the first information through a first port and a second port, wherein the first DMRS sequence corresponds to the first port, and the first DMRS sequence is used for channel estimation corresponding to the first port.

11. The method according to claim 10, wherein the first information further comprises a second DMRS sequence, the second DMRS sequence corresponds to the second port, and the second DMRS sequence is used for channel estimation corresponding to the second port; and
the first DMRS sequence and the second DMRS sequence occupy a same symbol, and subcarriers occupied by the first DMRS sequence are different from subcarriers occupied by the second DMRS sequence.

12. The method according to any one of claims 1 to 11, wherein the transmit power of the first DMRS sequence is α1 times the transmit power of the first sequence, and α1 is a real number greater than 1.

13. The method according to claim 12, wherein α1 is a multiple of 10.

14. The method according to any one of claims 1 to 11, wherein
the first sequence comprises a second sequence, the second sequence is used for phase noise estimation, a transmit power of the second sequence is α2 times a transmit power of a sequence other than the second sequence in the first sequence, and α2 is a real number greater than 1.

15. The method according to claim 14, wherein the transmit power of the first DMRS sequence is the same as the transmit power of the second sequence.

16. The method according to any one of claims 1 to 15, further comprising:
outputting configuration information, wherein the configuration information comprises a power scaling factor, wherein
the power scaling factor indicates a multiple relationship between the transmit power of the first DMRS sequence and the transmit power of the first sequence, and/or a multiple relationship between the transmit power of the second sequence and a transmit power of a sequence other than the second sequence in the first sequence, the first sequence comprises the second sequence, and the second sequence is used for phase noise estimation.

17. A communication method, comprising:
obtaining second information, wherein the second information is determined based on first information and a transmission channel, the first information comprises a first demodulation reference signal DMRS sequence and a first sequence, the first information occupies M symbols, the first DMRS sequence occupies M1 symbols among the M symbols, the first sequence occupies M2 symbols among the M symbols, M1, M2, and M are all positive integers, the first sequence is obtained by performing repetition, frequency domain phase offset, or time domain cyclic shift on the first DMRS sequence, and a power of the first DMRS sequence is greater than a power of the first sequence; and
performing calculation based on the first DMRS sequence, the first sequence, and the second information.

18. The method according to claim 17, wherein the first DMRS sequence is used for channel estimation and/or sensing, and the first sequence is used for sensing.

19. The method according to claim 17 or 18, wherein the first DMRS sequence comprises a phase-modulated symbol.

20. The method according to claim 19, wherein the phase-modulated symbol is generated through modulation based on a binary sequence, and the binary sequence comprises one or more of the following: a Golden sequence, an m sequence, or a Golay sequence.

21. The method according to claim 19, wherein the phase-modulated symbol is generated based on a ZC sequence.

22. The method according to any one of claims 17 to 21, wherein
the first DMRS sequence is a front-loaded DMRS sequence, and M1 is equal to 1; or
the first DMRS sequence comprises a front-loaded DMRS sequence and an additional DMRS sequence, M1 is greater than 1, and a spacing between the front-loaded DMRS sequence and the additional DMRS sequence is greater than or equal to one symbol.

23. The method according to any one of claims 17 to 22, wherein when the first sequence is obtained by performing frequency domain phase offset on the first DMRS sequence, the first sequence and the first DMRS sequence satisfy the following formula in frequency domain: ${\overline{X}}_{m 2} \left(k\right) = {X}_{m 1} \left(k\right) {e}^{j 2 {πβ}_{m 2} k}$ wherein
X̅ₘ₂(k) is a sequence of the first sequence in frequency domain;
Xₘ₁(k) is a sequence of the first DMRS sequence in frequency domain;
k is a subcarrier index, and 0≤k<N1;
m1 and m2 are symbol indices, 0<m1≤M1, and 0<m2≤M2;
βₘ₂ is a phase offset; and
N1 is a quantity of subcarriers occupied by the first DMRS sequence.

24. The method according to any one of claims 17 to 22, wherein when the first sequence is obtained by performing time domain cyclic shift on the first DMRS sequence, the first sequence and the first DMRS sequence satisfy the following formula in time domain: ${\overline{x}}_{m 2} \left(s\right) = {x}_{m 1} \left(s-N1{β}_{m 2}\right)$ wherein
x̅ₘ₂(s) is a sequence of the first sequence in time domain;
xₘ₁(s-N1βₘ₂) is a sequence of the first DMRS sequence in time domain;
s is an index of time-domain sampling, and 0≤s<N1;
m1 and m2 are symbol indices, 0<m1≤M1, and 0<m2≤M2;
βₘ₂ is a phase offset; and
N1 is a quantity of subcarriers occupied by the first DMRS sequence.

25. The method according to any one of claims 17 to 24, wherein the first DMRS sequence corresponds to a first port, and the first DMRS sequence is used for channel estimation corresponding to the first port;
the first information further comprises a second DMRS sequence, the second DMRS sequence corresponds to a second port, and the second DMRS sequence is used for channel estimation corresponding to the second port; and
the first DMRS sequence and the second DMRS sequence occupy a same symbol, and subcarriers occupied by the first DMRS sequence are different from subcarriers occupied by the second DMRS sequence.

26. The method according to any one of claims 17 to 25, wherein the power of the first DMRS sequence is α1 times the power of the first sequence, and α1 is a real number greater than 1.

27. The method according to claim 26, wherein α1 is a multiple of 10.

28. The method according to any one of claims 17 to 25, wherein
the first sequence comprises a second sequence, the second sequence is used for phase noise estimation, a power of the second sequence is α2 times a power of a sequence other than the second sequence in the first sequence, and α2 is a real number greater than 1.

29. The method according to claim 28, wherein the power of the first DMRS sequence is the same as the power of the second sequence.

30. The method according to any one of claims 17 to 29, further comprising:
obtaining configuration information, wherein the configuration information comprises a power scaling factor, wherein
the power scaling factor indicates a multiple relationship between the power of the first DMRS sequence and the power of the first sequence, and/or a multiple relationship between the power of the second sequence and a power of a sequence other than the second sequence in the first sequence, the first sequence comprises the second sequence, and the second sequence is used for phase noise estimation.

31. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to perform the method according to any one of claims 1 to 16 by using a logic circuit or by executing code instructions, or the processor is configured to perform the method according to any one of claims 17 to 30 by using a logic circuit or by executing code instructions.

32. A computer-readable storage medium, wherein the storage medium stores a computer program or instructions, and when the computer program or the instructions are executed by a communication apparatus, the method according to any one of claims 1 to 16 is implemented, or the method according to any one of claims 17 to 30 is implemented.

33. A computer program product, wherein the computer program product comprises a computer program or instructions, and when the computer program or the instructions are executed by a communication apparatus, the method according to any one of claims 1 to 16 is implemented, or the method according to any one of claims 17 to 30 is implemented.
